# EUROPEAN PATENT SPECIFICATION

(11) **EP 2 896 679 B1**
(45) Date of publication and mention of the grant of the patent: **11.10.2017**
(21) Application number: 13837203.2
(22) Date of filing: 02.08.2013
(51) Int. Cl.: C10B 39/02

(54) **COKE DRY QUENCHING FACILITY**
ANLAGE ZUR TROCKENLÖSCHUNG VON KOKS
ÉQUIPEMENT POUR EXTINCTION DU COKE À SEC

(30) Priority: 13.09.2012 JP 2012201819
(43) Date of publication of application: 22.07.2015
(73) Proprietor: Nippon Steel & Sumikin Engineering Co., Ltd., Tokyo 141-8604 (JP); NS Plant Designing Corporation, Fukuoka 804-0002 (JP)
(72) Inventor: EGUCHI Kazuya, Kitakyushu-shi Fukuoka 804-0002 (JP); EGAWA Yoshio, Kitakyushu-shi Fukuoka 804-0002 (JP); YOKOTE Kosuke, Kitakyushu-shi Fukuoka 804-8501 (JP); KANEKO Udai, Kitakyushu-shi Fukuoka 804-8501 (JP)
(74) Representative: Grosse, Rainer
(86) International application number: PCT/JP2013/071010
(87) International publication number: WO 2014/041919

(56) References cited:
- JP-A- S5 125 501
- JP-A- H02 151 687
- JP-A- S56 127 680
- JP-A- S57 139 177
- JP-A- S61 143 488
- SU-A1- 998 490

## Description

### Technical Field

The present invention relates to a coke dry quenching facility.

### Background Art

Iron-manufacturing process starts with a step to manufacture pig iron, where iron is reduced from iron ore (iron oxide) with coke that is solidified coal by baking. Coke Dry Quenching (CDQ) is a facility to cool red-hot coke baked in a coke oven, from which heat is recovered to generate high-temperature and high-pressure steam. The thus generated steam is typically used as electricity and processing steam to produce iron and steel.

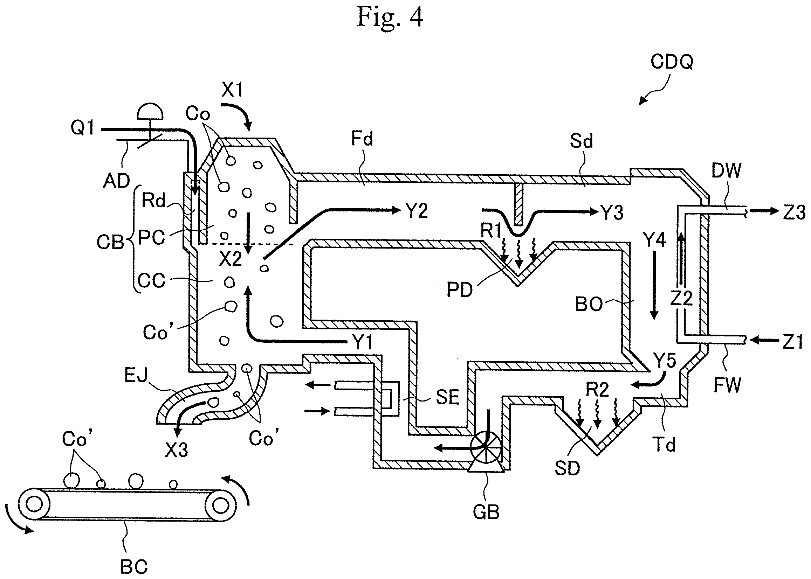

Referring now to Fig. 4, the following briefly describes conventional CDQ. As shown in the drawing, the conventional CDQ includes two heat exchangers of a chamber CB and a boiler BO. In the chamber CB, inert gas as circulating cooling gas (gas containing nitrogen as a major ingredient as well as CO2, H2O, small amount of CO and H2) is used to cool red-hot coke Co.

The chamber CB and the boiler BO are connected to a primary dust catcher PD via a first duct Fd, which is then connected to the boiler BO via a second duct Sd. The boiler BO is connected to the secondary dust catcher SD via a third duct Td, which is then connected to the chamber CB via a gas blower GB and the third duct Td. The dust catchers PD and SD have inner walls, with which gas collide, and during the course of the circulating cooling gas passing therethrough, dust such as coke collides with the walls and falls downward (R1 direction and R2 direction).

Red-hot coke Co discharged from a not-illustrated coke oven and stored in a not-illustrated bucket is brought in the chamber CB from a top thereof (XI direction). The chamber CB includes an upper pre-chamber PC to store the red-hot coke Co at a high temperature, from which the red-hot coke Co is allowed to fall downward to a cooling chamber CC located below at constant time intervals. Such an operation allows the red-hot coke Co to be cooled down from the original temperature at about 1,000°C to 200°C or lower (cooled red-hot coke Co' is generated), which is then ejected through an coke discharging equipment EJ provided at a bottom of the chamber CB and is then carried to a not-illustrated blast furnace by a conveyor BC.

Such circulating cooling gas contains unburned gas such as CO, and in order to totally complete a combustion reaction of such unburned gas before the circulating cooling gas reaches the entrance of the boiler BO, an air introduction path AD for unburned gas combustion is typically provided at a top of a ring duct Rd surrounding the pre-chamber PC of the chamber CB, through which air for combustion is provided to the circulating cooling gas. The reason for completing the combustion of unburned gas before the circulating cooling gas reaches the boiler is to increase the temperature of the circulating cooling gas and so increase the amount of heat recovery by the boiler. The reason for providing air for combustion on the upstream side of the primary dust catcher PD is because it takes a certain time to mix the unburned gas and air (oxygen) for combustion sufficiently. The circulating cooling gas ascending from the cooling chamber CC to the ring duct Rd has a temperature increased to about 800 to 900°C, to which the air for combustion is then provided, whereby the temperature of the circulating cooling gas rises more to about 1,000°C to be high-temperature atmosphere.

The circulating cooling gas flows generally in the CDQ as follows. The circulating cooling gas including inert gas is blown into the cooling chamber CC at a lower part of the chamber from the gas blower GB as a part of the circulation facility (Y1 direction), and ascends upward (Y2 direction) to come into contact with high-temperature red-hot coke Co falling downward (X2 direction). Then, the circulating cooling gas passes through the ring duct Rd surrounding the pre-chamber PC, and enters the primary dust catcher PD from the first duct Fd (flue) (Y2 direction) and flows toward the boiler (Y3 direction).

The circulating cooling gas flowing through the first duct Fd typically includes a large amount of coke powder having high abrasiveness, and so the primary dust catcher PD can rough-catch 20 to 30% of the entire coke powder (R1 direction).

The boiler BO internally includes a water feeding pipe FW and a steam exhaust pipe DW that are integrally installed, so that water is fed through the water feeding pipe FW (Z1 direction), the water turns into steam while flowing through the boiler BO (Z2 direction) by the heat of the circulating cooling gas flowing through the boiler BO (Y4 direction) and the steam is then ejected via the steam exhaust pipe DW for heat recovery (Z3 direction).

The temperature of the circulating cooling gas whose heat was taken by the generating steam falls to 200°C or lower, and flows toward the secondary dust catcher SD via the third duct (Y5 direction), where most of the remaining coke powder of the circulating cooling gas is caught (R2 direction).

After most of the coke powder contained in the circulating cooling gas is collected and the temperature falls to 200°C or lower, the temperature of the circulating cooling gas further falls via the gas blower GB and a supply water preheater SE to be at about 130°C, and the circulating cooling gas in such a state is blown into the cooling chamber CC (Y1 direction). In this way, the circulating cooling gas circulates in the CDQ.

Patent Literature 1 discloses a technique relating to a coke dry quenching facility that is configured to provide air for unburned gas combustion to circulating cooling gas on the upstream side of a primary dust catcher as shown in Fig. 4, especially having a feature in the way to blow air.

The CDQ disclosed in Patent Literature 1 also includes a conventionally configured primary dust catcher, and as described above, such a primary dust catcher is typically of a type with low catching efficiency, and so such CDQ has to prevent abrasion at the boiler. To this end, a method to form an abrasion-resistant film by applying an abrasion-resistance material to a heat-transfer face by thermal spraying or the like or a method to slow the flow of the circulating cooling gas are used, for example.

The method to form an abrasion-resistant film by applying an abrasion-resistance material to a wall face by thermal spraying or the like has a large problem of cost required for such a film formation operation. In the method to slow the flow of the circulating cooling gas, a heat-transfer area has to be increased to compensate for the heat-transfer performance lowered due to the slower flow, and so to suppress reduction in the amount of heat recovered. Such an increase in heat-transfer area directly causes an increase in the scale of the boiler, which also leads to the problem of the facility cost.

Instead of the conventional primary dust catcher, a cyclone may be used as disclosed in Patent Literature 2 so as to increase the catching efficiency of coke powder that the circulating cooling gas contains at a former stage of the circulating cooling gas entering the boiler, and suppress the increase in cost resulting from a larger scale of the boiler, for example.

However, since circulating cooling gas at about 1,000°C flows into the cyclone, it becomes difficult to use stainless steel or the like for the cyclone, which is a typical heat-resistant steel to form a cyclone, and expensive heat-resistant materials such as Inconel have to be used, and so the problem of the facility cost cannot be solved yet. Additionally, another problem of clinker (melt) adhered to the cyclone wall is caused because unburned gas and oxygen coexist and a combustion reaction thereof occurs, which degrades the dust-collecting property.

As a further countermeasure, it may be considered to use a cyclone and increase the flow rate of the circulating cooling gas to lower the gas temperature. In this case also, an increase in size (involving an increase in power consumption by the gas blower) of the CDQ (system) as a whole due to the increase in gas flow rate cannot be avoided, and so the problem of the facility cost still occurs.

Furthermore, Patent Literature 3 discloses a coke dry quenching facility comprising a chamber, a cyclone and a boiler. An air introduction is provided in the upper part of the cyclone.

### Citation List

### Patent Literatures

Patent Literature 1: Japanese Patent Application Publication No. S61(1986)-168690 A
Patent Literature 2: Japanese Utility Model Application Publication No. S63(1988)-81838 A
Patent Literature 3: SU 998 490 A1

### Summary of Invention

### Technical Problem

In view of the aforementioned problems, it is an object of the present invention to provide a coke dry quenching facility that can improve the catching efficiency of coke powder that the circulating cooling gas contains at a former state of the boiler. The coke dry quenching facility includes a cyclone instead of a conventional dust catcher as a primary dust catcher, the coke dry quenching facility having the configuration so as not to provide circulating cooling gas of about 1,000°C to the cyclone and enabling temperature rise of the circulating cooling gas to about 1,000°C before reaching a boiler, thus preventing a decrease in heat recovery amount by the boiler without increasing the flow rate of the circulating cooling gas.

### Solution to Problem

In order to fulfill the above-stated object, a coke dry quenching facility of the present invention includes: a chamber, into which red-hot coke is supplied and circulating cooling gas is blown; a dust catcher, into which circulating cooling gas having temperature rising due to red-hot coke in the chamber is introduced via a first duct, the dust catcher collecting coke powder in the circulating cooling gas; and a boiler, into which circulating cooling gas flowing out from the dust catcher is introduced via a second duct, the boiler recovering heat of circulating cooling gas. Circulating cooling gas flowing out from the boiler is returned to the chamber again via a third duct connecting the boiler and the chamber, thus cooling red-hot coke therein. The dust catcher includes a cyclone. Circulating cooling gas having temperature controlled to be 900°C or lower is provided at the cyclone. An air introduction path to introduce air to circulating cooling gas for combustion of unburned gas in the circulating cooling gas is located at a part along the second duct only.

The coke dry quenching (CDQ) facility of the present invention includes a cyclone as a dust catcher, and is configured to provide an air introduction path not at a part between the chamber and the first duct but at a part along the second duct only so as to introduce air to the circulating cooling gas for unburned gas combustion. This configuration makes sure that circulating cooling gas having temperature controlled to be 900°C or lower is provided at the cyclone and circulating cooling gas at about 1,000°C after combustion of the unburned gas is provided to the boiler.

The configuration "to provide circulating cooling gas having temperature controlled to be 900°C or lower at the cyclone, and to provide an air introduction path to introduce air to circulating cooling gas for combustion of unburned gas in the circulating cooling gas not at a part between the chamber and the first duct but at a part along the second duct only" means that to provide circulating cooling gas having temperature controlled to be 900°C or lower and to provide an air introduction path at a part along the second duct only are closely linked. That is, the configuration to introduce air, even if at a small amount, into the first duct or the chamber located upstream of the cyclone, for example, may appear not to satisfy the configuration of the present invention in terms of the configuration (literally). However, as long as circulating cooling gas at a temperature of 900°C or lower, which does not cause a problem at the wall face of the cyclone, is provided to the cyclone, such a control mode also is included in the above-mentioned configuration of the present invention. That is, the only configuration to circumvent the present invention is a mode to provide circulating cooling gas at a temperature exceeding 900°C at the cyclone, and to this end, an air introduction path is provided at a part between the chamber and the first duct, and air provided via this can generate circulating cooling gas at a temperature exceeding 900°C (e.g., at about 980°C) at a duct upstream of the cyclone. Therefore, not such a configuration but the configuration to provide a small amount of air to circulating cooling gas, which includes an air introduction path such as duct on the upstream side of the cyclone, has the advantageous effects of the present invention, and so when the configuration is to introduce circulating cooling gas at a temperature of 900°C or lower into a cyclone, such a configuration is included in the above-mentioned configuration of the present invention even when the mode to provide an air introduction path is different from that of the present invention. Herein, "controlled to be 900°C or lower" can be executed by not providing air on the upstream side of the cyclone based on the conventional performance of CDQ. Another mode is to control the circulating cooling gas to be at a low temperature (e.g., control to be at about 100°C that is lower than at 130°C that is a conventional and typical temperature) before and after the circulating cooling gas enters the cooling chamber so that the circulating cooling gas flowing through the first duct can have a temperature at 900°C or lower.

In this way, the configuration of the CDQ facility is improved so as to include the cyclone having excellent dust-catching performance as well as the air introduction path provided differently from the conventional configuration for combustion of unburned gas in the circulating cooling gas. With this configuration, the circulating cooling gas at a relatively low temperature range of 900°C or lower flows into the cyclone for dust catching, and so the cyclone can be made of typical heat-resistant steel such as stainless steel including SUS304, for example, and not an expensive heat-resistant material such as Inconel.

Especially, air is provided to unburned gas at a duct (the second duct) that is downstream of the cyclone generating the swirling flow, whereby combustion of the unburned gas can be promoted using the swirling flow of the circulating cooling gas including the unburned gas. Therefore, the configuration having a shorter distance between the cyclone and the boiler, i.e., a shorter length of the second duct also can complete securely the combustion of unburned gas before the circulating cooling gas reaches the boiler. The present inventors confirmed that the time required for the swirling circulating cooling gas reaching from the cyclone to the boiler is about 1 second or shorter, and unburned gas can be completely burned in such a short time.

Further since air is not provided to the circulating cooling gas at the cyclone, clinker generated from combustion of unburned gas in the cyclone, which adheres to the cyclone wall can be suspended. This can prevent the problem of degradation in dust-catching property of the cyclone due to the clinker adhered to the wall.

Since the temperature of the circulating cooling gas provided at the cyclone is lowered, thermal expansion accordingly is suppressed. As a result, the volume of the circulating cooling gas provided also is reduced, and the cyclone can be made compact. The estimation shows that the volume of the circulating cooling gas at about 800 to 900°C can be about 75% of the volume of the circulating cooling gas at about 980°C.

It was also found that the cyclone used can achieve the amount of dust caught that is 3 to 8 times as much as the conventional primary dust catcher described above, and so can greatly reduce the concentration of dust. This can greatly reduce the influences of abrasion by the circulating cooling gas in the boiler, and so cost to form an abrasion-resistant film such as for thermal spraying or a protector becomes unnecessary. The flow of the circulating cooling gas also can be speeded up to by about 1.5 times, and heat-transfer performance can be accordingly improved, (improved K value (overall heat transfer coefficient) enables a decrease in heat-transfer area), so that the boiler can be made compact when a constant amount of steam is to be recovered.

The increased dust-catching efficiency by the cyclone can eliminate a secondary dust catcher and a conveyor associated therewith, which are provided downstream of the boiler in the conventional configuration, leading to a decrease in the facility cost of the CDQ system as a whole.

Preferably the second duct includes a rising part rising upward from a top of the cyclone and a horizontal part that is bent from the rising part and extends in a horizontal direction or a substantially horizontal direction, and an air introduction path is provided at the rising part. Herein, the "substantially horizontal direction" refers to inclination with reference to the horizontal direction within the range of about ±20 degrees.

Swirling flow of the circulating cooling gas generated at the cyclone flows through the entire section of the second duct including the rising part and the horizontal part extending in the horizontal direction or the substantially horizontal direction.

Herein, since the air introduction path is provided at the rising part rising upward from the top of the cyclone, air can be provided to the swirling flow at a high swirling flow velocity, whereby combustion of unburned gas can be promoted compared with the case of air provided at the horizontal part.

The air introduction path can be provided preferably at a position not inhibiting the swirling flow that is generated during the course of the circulating cooling gas entering the cyclone along the curved line shaped air introduction path provided laterally to the cylindrical rising part, for example, while defining the air introduction direction not inhibiting the swirl flow similarly. The air introduction path may be provided in various modes. For example, one air introduction path may be provided at a predetermined level position of the rising part, or two to four air introduction paths may be provided at the same level of the rising part (in the case of two, they are at positions of diagonal lines, in the case of three, they are at intervals of 120 degrees, and in the case of four, they are at intervals of 90 degrees).

### Advantageous Effects of Invention

As can be understood from the above, the CDQ facility of the present invention includes the cyclone having excellent dust-catching performance as well as the air introduction paths provided differently from the conventional configuration for combustion of unburned gas in the circulating cooling gas. With this configuration, the circulating cooling gas at a temperature lower than in the conventional configuration flows into the cyclone for dust catching without increasing the flow rate of the circulating cooling gas, and so the cyclone can be made of typical heat-resistant steel. Clinker generated in the cyclone also can be reduced, and so degradation in dust-catching property of the cyclone can be suppressed. Since the temperature of the circulating cooling gas provided at the cyclone is at 900°C or lower, the volume of the circulating cooling gas also is reduced, and the cyclone can be made compact. Since the cyclone can greatly reduce the concentration of dust, the circulating cooling gas flowing through the boiler contains less dust, and so a measure against the abrasion on the heat-transfer face of the boiler can be eliminated. The flow of the circulating cooling gas can be speeded up, and so the boiler can be made compact due to improved heat-transfer performance. A secondary dust catcher and a conveyor associated therewith also can be eliminated, and in combination with such various advantageous effects, the facility cost of the CDQ system as a whole can be greatly reduced.

### Brief Description of Drawings

[Figure 1] Fig. 1 schematically shows an embodiment of a coke dry quenching facility of the present invention.
[Figure 2] Fig. 2 is a perspective enlarged view of a cyclone and a second duct.
[Figure 3] Fig. 3 is a view taken along the arrow III-III of Fig. 2.
[Figure 4] Fig. 4 schematically shows an embodiment of a conventional coke dry quenching facility.

### Description of Embodiments

The following describes one embodiment of a coke dry quenching facility of the present invention, with reference to the drawings. In the illustrated example, a rising part of a second duct is provided with four air introduction paths disposed at intervals of 90 degrees. Needless to say, the rising part may be provided with air introduction paths in number other than the illustrated example, or an air introduction path may be provided at a horizontal part.

### (Embodiment of coke dry quenching facility)

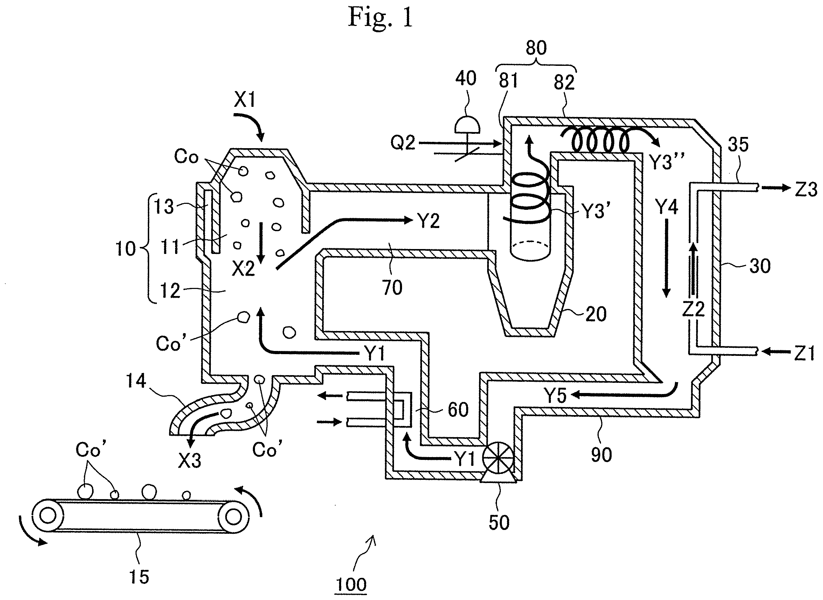

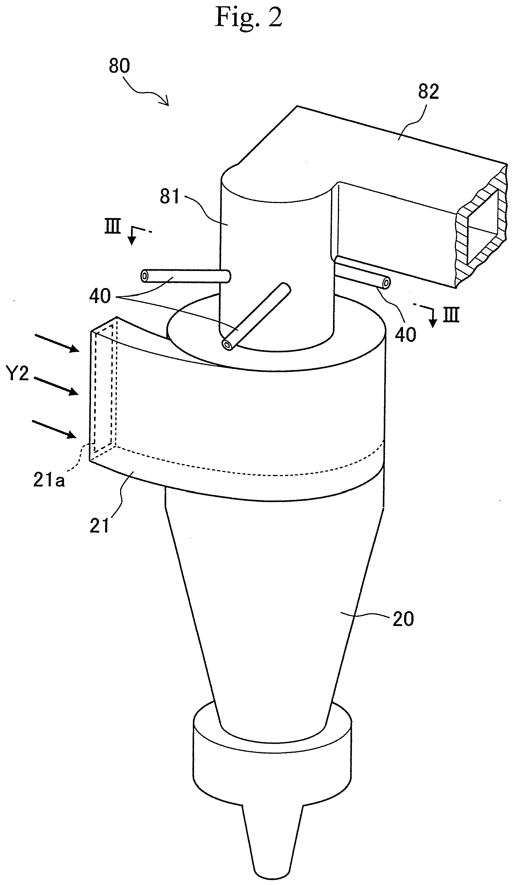

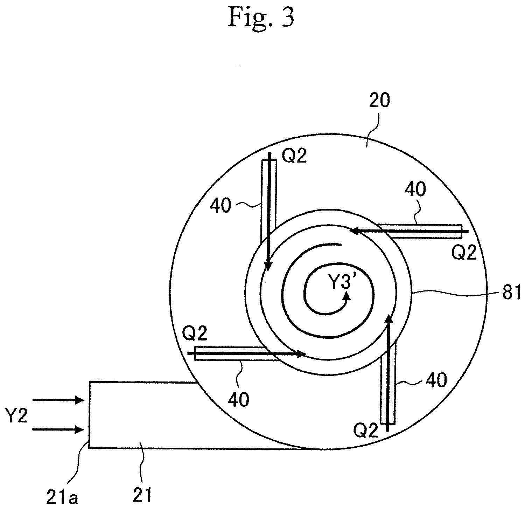

Fig. 1 schematically shows an embodiment of the coke dry quenching of the present invention, Fig. 2 is a perspective enlarged view of a cyclone and a second duct, and Fig. 3 is a view taken along the arrow III-III of Fig. 2.

A coke dry quenching facility (CDQ) 100 illustrated roughly includes two heat exchangers of a chamber 10 and a boiler 30 as well as a cyclone 20 as a dust catcher, which are in fluid communication with each other via a first duct 70, a second duct 80 and a third duct 90 making up a flow system of circulating cooling gas including inert gas (e.g., gas containing nitrogen as a major ingredient as well as CO₂, H₂O, small amount of CO and H₂).

Specifically, the chamber 10 and the cyclone 20 are connected via the first duct 70, the cyclone 20 and the boiler 30 are connected via the second duct 80, and the boiler 30 and the chamber 10 are connected via a gas blower 50 provided between them and via the third duct 90.

The circulating cooling gas including inert gas cools high-temperature red-hot coke Co while circulating the illustrated flow system, and the circulating cooling gas increasing in temperature by the heat from the red-hot coke Co evaporates water flowing through the boiler 30, thus generating steam.

Red-hot coke Co discharged from a not-illustrated coke oven and stored in a not-illustrated bucket is brought in the chamber 10 from a top thereof (X1 direction). The chamber 10 includes an upper pre-chamber 11 to store the red-hot coke Co at a high temperature, from which the red-hot coke Co is allowed to fall down to a cooling chamber 12 located below at constant time intervals. Such an operation allows the red-hot coke Co to be cooled down from the original temperature at about 1,000°C to 200°C or lower (cooled red-hot coke Co' is generated), which is then ejected through an coke discharging equipment 14 provided at a bottom of the chamber 10 and is then carried to a not-illustrated blast furnace by a conveyor 15.

Such circulating cooling gas contains unburned gas such as CO, and in order to totally burn such unburned gas before the circulating cooling gas reaches the entrance of the boiler 30, the illustrated coke dry quenching facility 100 includes an air introduction path 40 for unburned gas combustion only at a position along the second duct 80 located downstream of the cyclone 20 (not at a position along the chamber 10 or the first duct 70), through which air for combustion is provided to the circulating cooling gas.

The circulating cooling gas is blown into the cooling chamber 12 at a lower part of the chamber from the gas blower 50 as a part of the circulation facility (Y1 direction), and ascends upward (Y2 direction) to come into contact with high-temperature red-hot coke Co falling downward (X2 direction). Then, the circulating cooling gas passes through the ring duct 13 surrounding the pre-chamber 11, enters the cyclone 20 as a dust catcher from the first duct 70 (Y2 direction), turns into swirling flow Y3' at the cyclone 20 and flows toward the boiler (Y3" direction).

The temperature of the circulating cooling gas ascending from the cooling chamber 12 to the ring duct 13 (Y1 direction) rises to about 800°C, and unlike the conventional CDQ, air for combustion is not provided to the circulating cooling gas at the chamber 10, and so the temperature of the circulating cooling gas does not rise more. The circulating cooling gas at about 800°C (temperature of 900°C or lower) then flows from the ring duct 13 to the first duct 70.

The circulating cooling gas flowing through the first duct 70 enters the cyclone 20 while keeping the temperature at about 800°C, where swirling flow Y3' is generated.

As shown in Fig. 2, the cyclone 20 has a cylindrical shape having a diameter gradually decreasing downward, inside which a curved line shaped coke charging equipment path 21 of the circulating cooling gas is connected in a fluid communication manner. A rising part 81 as a part of the second duct 80 rises from a top of the cyclone 20, from which a horizontal part 82 as a part of the second duct 80 is bent and leads to the boiler 30 side.

Four air introduction paths 40 are provided at a part along the rising part 81 at intervals of 90 degrees as shown in Fig. 3, where the air introduction direction (Q2 direction) of each of the air introduction paths 40 is defined in the direction not inhibiting the swirling flow Y3' of the circulating cooling gas generated during the passage through the coke charging equipment path 21 (Y2 direction).

Referring back to Fig. 1, the cyclone 20 catches coke powder having high abrasiveness included in the circulating cooling gas effectively.

Then, at the rising part 81 of the second duct 80 above the cyclone 20, air for unburned gas composition in the circulating cooling gas is provided. Since the circulating cooling gas swirls there, unburned gas can be mixed with air provided sufficiently, thus promoting combustion of the unburned gas.

After the unburned gas is completely burned, as the circulating cooling gas flows toward the boiler through the horizontal part 82 in the form of the swirl flow Y3", the temperature thereof rises to about 1,000°C from 800°C (900°C or lower) that is the temperature before flowing into the cyclone 20 and then flows into the boiler 30.

The boiler 30 internally includes a steam generation/recovery path 35 to feed water and eject steam. Water is fed via the steam generation/recovery path 35 (Z1 direction), and the water turns into steam while flowing through the boiler 30 (Z2 direction) by the heat of the circulating cooling gas flowing through the boiler 30 (Y4 direction). The steam is then ejected via the steam generation/recovery path 35 for heat recovery (Z3 direction).

The temperature of the circulating cooling gas whose heat was taken by the steam generated falls to 200°C or lower, and flows toward the chamber 10 side via the third duct 90 (Y5 direction). The temperature of the circulating cooling gas further falls via the gas blower 50 and via a supply water preheater 60, so that the circulating cooling gas at about 130°C is blown into the cooling chamber 12 (Y1 direction). In this way, the circulating cooling gas circulates in the CDQ.

In this way, the configuration of the CDQ facility is improved so as to include the cyclone 20 having excellent dust-catching performance as well as the air introduction paths 40 provided differently from the conventional configuration for combustion of unburned gas in the circulating cooling gas. With this configuration, the circulating cooling gas at a relatively low temperature range of 900°C or lower flows into the cyclone 20 for dust catching, and so the cyclone 20 can be made of typical heat-resistant steel such as stainless steel and not an expensive heat-resistant material such as Inconel. Especially, air is provided to unburned gas at the second duct 80 downstream of the cyclone 20 generating the swirling flow Y3', whereby combustion of the unburned gas can be promoted using the swirling flow Y3' of the circulating cooling gas including the unburned gas. Therefore, the configuration having a shorter distance between the cyclone 20 and the boiler 30, i.e., a shorter length of the second duct 80 also can complete securely the combustion of unburned gas before the circulating cooling gas reaches the boiler 30. Further since air is not provided to the circulating cooling gas at the cyclone 20, clinker generated from combustion of unburned gas in the cyclone 20 and adhered to the cyclone wall can be suspended. This can prevent the problem of degradation in dust-catching property of the cyclone 20 due to the clinker adhered to the wall. Since the temperature of the circulating cooling gas provided at the cyclone 20 falls to 900°C or lower, thermal expansion accordingly is suppressed. As a result, the volume of the circulating cooling gas provided also is reduced, and the cyclone 20 can be made compact. Moreover, the cyclone 20 can greatly reduce the concentration of dust in the circulating cooling gas compared with the conventional primary dust catcher. This can greatly reduce the influences of abrasion by the circulating cooling gas in the boiler 30, and so cost to form an abrasion-resistant film such as for thermal spraying or a protector becomes unnecessary. The flow of the circulating cooling gas can be speeded up, and heat-transfer performance can be accordingly improved, so that the boiler 30 can be made compact when a constant amount of steam is to be recovered. The increased dust-catching efficiency by the cyclone 20 can eliminate a secondary dust catcher and a conveyor associated therewith, which are provided downstream of the boiler in the conventional configuration, leading to a decrease in the facility cost of the CDQ system as a whole.

### [Verification on complete combustion of unburned gas between cyclone and boiler, and result thereof]

The present inventors made an analysis for verification about complete combustion of unburned gas being enabled from the cyclone to the boiler on the basis of the following process conditions and calculation method.

**[Table 1]**

| (Process conditions) | | | |
|---|---|---|---|
| | Units | Cyclone entrance | Air for combustion |
| Gas flow rate | Nm³/h | 128310 | 13200 |
| Temperatures | °C | 757 | 20 |
| Gas ingredients (%) | CO | 10 | - |
| | H₂ | 5 | - |
| | O₂ | 0 | 21 |
| | CO₂ | 12.3 | - |
| | H₂O | 9.8 | - |
| | N₂ | 62.9 | 79 |

### (Calculation method and analysis model)

(1) Analysis is made in a static state.
(2) Uniform negative pressure is applied to a cross-section at a lower part of the boiler.
(3) Gas is ejected uniformly from the entrance of the cyclone (uneven flow is not considered).
(4) Air for combustion is provided at the exit of the cyclone (4 positions) only.
(5) Output includes flow-velocity distribution, temperature distribution, pressure distribution and gas density (O₂, H₂, CO) distribution.
(6) The cyclone as an analysis model has the same shape as that of Figs. 2 and 3, and has a scale corresponding to the actual apparatus.

### (Analysis result)

The analysis result showed that, after blowing air, the combustion reaction was completed in about 0.1 second (it takes about 1 second for the swirling flow to reach the boiler). This is because a favorite combustion state can be achieved by the swirling flow.

### [Considerations on relations with dust concentration in circulating cooling gas and heat transfer area of boiler]

The present inventors considered the effect to reduce dust that is obtained from the cyclone. Specifically the cyclone introduced increases the effect to reduce dust, thus enabling the design of the boiler without considering the influences of abrasion by dust.

Further, the flow of the circulating cooling gas introduced into the boiler can be speeded up. This speeding-up greatly improves a K value (overall heat transfer coefficient), and the heat-transfer area can be reduced for the below-described reason, resulting in compact design of the boiler as a whole.

### (Evaluations of abrasion amount)

The abrasion amount at the walls of the boiler depends on the kinetic energy of dust and the amount of dust for the same type of dust. The kinetic energy is in proportion to the product of the mass by the square of the speed of dust. Compared with the dust amount of 10 g per normal cubic meter the conventional primary dust catcher and not a cyclone, the dust amount can be about 1 g that is 1/10 of the conventional one by removing dust with the cyclone at high effectiveness.

Additionally, the particle size of the dust also can be reduced to several hundreds µm to several tens µm, that is about 1/10 as well.

In this way, the amount of dust (mass) is decreased to about 1/10, and the abrasion amount can be accordingly reduced greatly.

### (Heat-transfer area)

The heat recovery amount Q can be represented by K*A*Δtm, where K denotes the overall heat transfer coefficient, A denotes the heat-transfer area and Δtm denotes log-mean temperature difference.

When setting the heat recovery amount Q constant, the K value can be increased by speeding up the flow of the circulating cooling gas in the boiler, and so the heat-transfer area A in the boiler can be made smaller, making the boiler more compact.

### [Considerations on the problem when temperature of circulating cooling gas is lowered by increasing the gas flow rate]

The present inventors examined, using the conventional CDQ where air is provided at a former stage of the primary dust catcher and the temperature of the circulating cooling gas is about 1,000°C, how much amount of the circulating cooling gas has to be increased to achieve the temperature condition of 900°C or lower as in the CDQ of the present invention.

As a result of the examination, the estimation shows that the flow rate of the circulating cooling gas has to be increased by 32% to lower the temperature of the circulating cooling gas from 1,000°C to 800°C in the conventionally configured CDQ. If such an increased amount of gas is to be processed by the cyclone, the cyclone has to have a cylindrical part having the diameter increased by 17% and the overall height also increased by 17%, leading to a greatly larger cyclone in size.

Further, since the flow rate of the circulating cooling gas in the circulating path also increases, the influences are not limited to a larger size of the cyclone, and devices such as the ducts and the blower also have to be larger in size, the power of the blower has to be increased, and the boiler has to be larger in size, for example.

In this way, when intending to lower the temperature of the circulating cooling gas at about 1,000°C at a former stage of the cyclone by increasing the gas flow rate, the facility becomes larger in size, leading to the problem of increased cost for the facility.

From the above, the configuration of the CDQ to include an air introduction path only at a part along the second duct to introduce air to the circulating cooling gas for unburned gas combustion leads to obtain the effect from the cyclone (improved dust-catching performance) as well as a large advantageous effect of reducing the facility cost for the CDQ.

Although that is a detailed description of the embodiments of the present invention with reference to the drawings, the specific configuration is not limited to the above-stated embodiments, and it should be understood that we intend to cover by the present invention design modifications without departing from the purports of the present invention.

### Reference Signs List

- 10: Chamber
- 11: Pre-chamber
- 12: Cooling chamber
- 13: Ring duct
- 14: Coke discharging equipment
- 15: Conveyor
- 20: Cyclone (dust catcher)
- 21: Coke charging equipment path
- 21a: Coke charging equipment opening
- 30: Boiler
- 35: Steam generation/recovery path
- 40: Air introduction path
- 50: Gas blower
- 60: Supply water preheater
- 70: First duct
- 80: Second duct
- 81: Rising part
- 82: Horizontal part
- 90: Third duct
- 100: Coke dry quenching facility (CDQ)
- Co: Red-hot coke
- Co': Cooled red-hot coke

## Claims

1. A coke dry quenching facility, comprising:
a chamber, into which red-hot coke is supplied and circulating cooling gas is blown;
a dust catcher, into which circulating cooling gas having temperature rising due to red-hot coke in the chamber is introduced via a first duct, the dust catcher collecting coke powder in the circulating cooling gas; and
a boiler, into which circulating cooling gas flowing out from the dust catcher is introduced via a second duct, the boiler recovering heat of circulating cooling gas,
wherein
circulating cooling gas flowing out from the boiler is returned to the chamber again via a third duct connecting the boiler and the chamber, thus cooling red-hot coke therein,
the dust catcher includes a cyclone,
circulating cooling gas having temperature controlled to be 900°C or lower is provided at the cyclone,
the second duct includes a rising part rising upward from a top of the cyclone and a horizontal part that is bent from the rising part and extends in a horizontal direction or a substantially horizontal direction, and
an air introduction path to introduce air to circulating cooling gas for combustion of unburned gas in the circulating cooling gas is located only at the rising part.

## Patentansprüche

1. Kokstrockenkühlungsanlage, umfassend:
eine Kammer, in die rotglühender Koks eingefüllt wird und zirkulierendes Kühlgas geblasen wird;
einen Staubfänger, in den zirkulierendes Kühlgas, dessen Temperatur aufgrund des rotglühenden Kokses in der Kammer steigt, über einen ersten Kanal eingeleitet wird, wobei der Staubfänger Kokspulver in dem zirkulierenden Kühlgas auffängt; und
einen Kessel, in den zirkulierendes Kühlgas, das aus dem Staubfänger ausströmt, über einen zweiten Kanal eingeleitet wird, wobei der Kessel Wärme aus dem zirkulierenden Kühlgas zurückgewinnt,
wobei
zirkulierendes Kühlgas, das aus dem Kessel ausströmt, über einen dritten Kanal, der den Kessel und die Kammer verbindet, wieder in die Kammer zurückgeführt wird, wodurch der rotglühende Koks darin gekühlt wird,
der Staubfänger einen Zyklon enthält,
zirkulierendes Kühlgas, dessen Temperatur auf 900°C oder weniger gesteuert wird, in dem Zyklon bereitgestellt wird,
der zweite Kanal einen aufstrebenden Teil aufweist, der von einer Oberseite des Zyklons aufstrebt, und einen horizontalen Teil aufweist, der von dem aufstrebenden Teil aus gebogen ist und sich in einer horizontalen Richtung oder einer im Wesentlichen horizontalen Richtung erstreckt, und
ein Lufteinleitungspfad zum Einleiten von Luft in zirkulierendes Kühlgas zum Verbrennen von unverbranntem Gas in dem zirkulierenden Kühlgas nur an dem aufstrebenden Teil angeordnet ist.

## Revendications

1. Installation d'extinction à sec du coke, comprenant :
une chambre qui est alimentée en coke chauffé au rouge et dans laquelle est soufflé un gaz de refroidissement en circulation ;
un capteur de poussière, dans lequel le gaz de refroidissement en circulation dont la température s'élève en raison du coke chauffé au rouge présent dans la chambre, est introduit par l'intermédiaire d'un premier conduit, le capteur de poussière collectant la poudre de coke présente dans le gaz de refroidissement en circulation ; et
une chaudière, dans laquelle le gaz de refroidissement en circulation s'écoulant hors du capteur de poussière est introduit par l'intermédiaire d'un deuxième conduit, la chaudière récupérant la chaleur du gaz de refroidissement en circulation,
dans laquelle :
le gaz de refroidissement en circulation s'écoulant hors de la chaudière est renvoyé dans la chambre par l'intermédiaire d'un troisième conduit reliant la chaudière et la chambre, de manière à y refroidir le coke chauffé au rouge,
le capteur de poussière comporte un cyclone,
le gaz de refroidissement en circulation dont la température est régulée pour être inférieure ou égale à 900 °C est fourni au cyclone,
le deuxième conduit comporte une partie montante s'élevant à partir d'un sommet du cyclone et une partie horizontale qui est coudée à partir de la partie montant et qui s'étend dans une direction horizontale ou une direction sensiblement horizontale, et
un trajet d'introduction d'air pour introduire de l'air dans le gaz de refroidissement en circulation en vue de la combustion de gaz non brûlé dans le gaz de refroidissement en circulation, ne se situe qu'au niveau de la partie montante.
